# EUROPEAN PATENT APPLICATION

(11) **EP 2 693 694 A1**
(43) Date of publication of application: **05.02.2014**
(21) Application number: 12763510.0
(22) Date of filing: 28.03.2012
(51) Int. Cl.: H04L 12/28

(54) **COMMUNICATION DEVICE, MAC ADDRESS DISTRIBUTION METHOD, PROGRAM, AND CONTROL DEVICE**

(30) Priority: 30.03.2011 JP 2011075122
(71) Applicant: NEC Corporation, Tokyo 108-8001 (JP)
(72) Inventor: YAMAUCHI Toshiro, Tokyo 108-8001 (JP)
(74) Representative: MacDougall, Alan John Shaw
(86) International application number: PCT/JP2012/058175
(87) International publication number: WO 2012/133547

(57) **Abstract**

A communication device includes a plurality of interface units, each of which is associated with at least one media access control (MAC) address and serves as a node connected to a network, a storage unit which stores information indicating a plurality of MAC addresses, and a plurality of control units, each of which notifies one of the plurality of interface units of a MAC address indicated by information read from the storage unit.

## Description

### TECHNICAL FIELD

The present invention relates to a communication device, a media access control (MAC) address distribution method, a program, and a control device.

### BACKGROUND ART

In a network such as Ethernet (registered trademark), a MAC address is used as information for uniquely identifying a node in the network. In Patent Literature 1, a transmission line controller multiplexing system in which a MAC address allocated to a local area network (LAN) controller is managed in an address storage device of a system processing apparatus and the LAN controller performs a communication process by reading the MAC address from the address storage device is disclosed. This transmission line controller multiplexing system includes a LAN controller state detection circuit, and selects a LAN controller capable of using a MAC address through the LAN controller state detection circuit. Thereby, management of the same MAC address for LAN controllers of an operation system and a reserve system is facilitated and simplification and acceleration of switching between the operation system and the reserve system at an abnormal time are promoted.

### [Document of the prior art]

### [Patent Document]

### [Patent Document 1]

Japanese Unexamined Patent Application, First Publication No. H8-235084

### DISCLOSURE OF INVENTION

### [Problem to be solved by the invention]

In the transmission line controller multiplexing system of Patent Literature 1, there is a problem in that it is difficult for communication across the LAN controller to continue when the system processing apparatus, which manages the MAC address allocated to the LAN controller, is abnormal or the like.

The present invention has been made in view of the above-described circumstances, and an object of the invention is to provide a communication device, a MAC address distribution method, a program, and a control device that enable communication to be continued without changing a MAC address even when a control unit configured to manage the MAC address is abnormal or the like.

### [Means for solving the problem]

The present invention has been made to solve the above-described problem. According to an aspect of the present invention, there is provided a communication device including: a plurality of interface units, each of which is an interface unit serving as a node connected to a network and is associated with at least one MAC address; a storage unit which stores information indicating a plurality of MAC addresses; and a plurality of control units, each of which notifies one of the plurality of interface units of a MAC address indicated by information read from the storage unit.

In addition, according to another aspect of the present invention, there is provided a MAC address distribution method for use in a communication device, which includes a plurality of interface units, each of which is an interface unit serving as a node connected to a network and is associated with at least one MAC address, a storage unit which stores information indicating a plurality of MAC addresses, and a plurality of control units, each of which notifies one of the plurality of interface units of a MAC address, the MAC address distribution method including: a first process of notifying, by one of the control units, each of the plurality of interface units of a MAC address indicated by the information read from the storage unit.

In addition, according to still another aspect of the present invention, there is provided a program for causing a computer of each of a plurality of control units in a communication device, which includes a plurality of interface units, each of which is an interface unit serving as a node connected to a network and is associated with at least one MAC address, a storage unit which stores information indicating a plurality of MAC addresses, and the control units, each of which notifies one of the plurality of interface units of a MAC address, to execute a first process of notifying each of the plurality of interface units of a MAC address indicated by the information read from the storage unit when the control unit serves as an active system.

In addition, according to still another aspect of the present invention, there is provided a control device connected to a plurality of communication devices each including a plurality of interface units, each of which is an interface unit serving as a node connected to a network and is associated with at least one MAC address, and a storage unit which stores information indicating a plurality of MAC addresses, wherein each of the plurality of interface units is notified of a MAC address indicated by information read from the storage unit.

### [Effect of Invention]

According to the present invention, it is possible to continue communication without changing a MAC address even when a control unit configured to manage the MAC address is abnormal or the like.

### BRIEF DESCRIPTION OF DRAWINGS

FIG. 1 is a schematic diagram illustrating an external appearance of a communication device according to an embodiment of the present invention.
FIG. 2 is a schematic block diagram illustrating a configuration of the communication device of the same embodiment.
FIG. 3 is a diagram illustrating a storage content example of a memory of the same embodiment.
FIG. 4 is a diagram illustrating a storage content example of a memory of the same embodiment.
FIG. 5 is a flowchart illustrating an operation of a control unit of the same embodiment.

### EMBODIMENTS FOR CARRYING OUT THE INVENTION

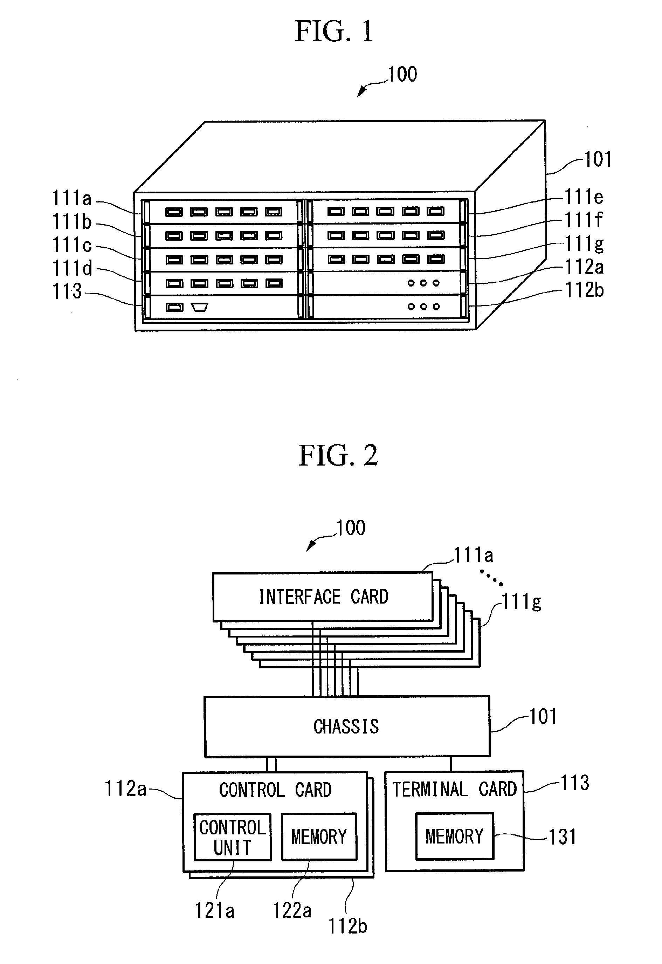

Hereinafter, an embodiment of the present invention will be described with reference to the drawings. FIG. 1 is a schematic diagram illustrating the external appearance of a communication device according to the embodiment of the present invention. In this embodiment, the communication device 100 is a device which connects plural networks. In this embodiment, the communication device 100 is configured to include a chassis 101, a plurality of (7 in FIG. 1) interface cards 111a to 111g (an interface unit), a plurality of (2 in FIG. 1) control cards 112a and 112b (a control unit or a control device), and a terminal card 113 (a storage unit) as illustrated in FIG. 1. The chassis 101 includes a plurality of (10 in FIG. 1) slots. The interface cards 111a to 111g, the control cards 112a and 112b, and the terminal card 113 are inserted into the slots. Also, a slot ID is allocated to each of the slots of the chassis 101.

Slot IDs are allocated in the following order: an upper left slot is allocated #1, a slot to the immediate right of #1 is allocated #2, a slot below #1 is allocated #3, and a slot to the immediate right of #3 is allocated #4. In FIG. 1, the interface cards 111a to 111g are inserted into slots of #1 to #7, the control cards 112a and 112b are inserted into slots of #8 and #10, and the terminal card 113 is inserted into the slot of #9.

Each of the interface cards 111a to 111g is provided with five Ethernet (registered trademark) ports. Each of these ports serves as a node connected to Ethernet (registered trademark). A MAC address of each of these ports is allocated through the control cards 112a and 112b. Each of the interface cards 111a to 111g communicates with a network connected to each port using the MAC address allocated to the port. Port IDs are allocated to these ports for each interface card 111. For example, port IDs #1 to #5 are allocated to the ports of the interface card 111a in order from the left. Likewise, the port IDs #1 to #5 are allocated to the ports of the interface card 111b in order from the left. The terminal card 113 includes an Ethernet (registered trademark) port or serial port for connecting a terminal for performing settings or the like of the communication device 100.

The control cards 112a and 112b control communication between the ports provided in the interface cards 111a to 111g. In addition, one of the control cards 112a and 112b operates as an active system and controls the above-described communication. The other operates as a standby system without performing control of the above-described communication or the like. However, when the one control card is abnormal due to a fault of the active system or the like, the other control card serves as the active system and performs control of the above-described communication and the like.

FIG. 2 is a schematic block diagram illustrating a configuration of the communication device 100. Each of the interface cards 111a to 111g, the control cards 112a and 112b, and the terminal card 113 includes a connector, and is inserted into a slot of the chassis 101, so that the connector is connected to a connector of the chassis 101. The chassis 101 supplies each card with power via the above-described connector, and mediates communication between the cards. Each of the control cards 112a and 112b is configured to include a control unit 121 and a memory 122 (a temporary storage unit). In FIG. 2, reference sign 121a is assigned to the control unit 121 of the control card 112a. Likewise, reference sign 122a is assigned to the memory 122 of the control card 112a. The terminal card 113 includes a memory 131.

The memory 131 is a non-volatile memory which pre-stores information indicating a plurality of MAC addresses. In this embodiment, the memory 131 stores information indicating 35 MAC addresses corresponding to a number (35) obtained by multiplying at least the number of (7) interface cards 111a to 111g by the number of (5) ports provided in each card.

When the above-described control card 112 serves as the active system, the control unit 121 reads the MAC address stored by the memory 131 and causes the memory 122 to store the read MAC address when the communication device 100 is turned on. Further, the control unit 121 determines the association between the MAC address stored in the memory 122 and each port of the interface cards 111a to 111g, and notifies the corresponding interface card 111 of the determined association between the MAC address and the port. As described above, by notifying the corresponding interface card 111 of the association between the MAC address and the port, the control unit 121 allocates the MAC address. In addition, when the above-described control card 112 serves as the standby system, the control unit 121 acquires the MAC address stored by the memory 122 from the control card 112 of the active system, and stores the acquired MAC address in the memory 122 of its own control card 112. That is, the control unit 121 of the standby system acquires the MAC address read by the control unit 121 of the active system from the memory 131 of the terminal card 113. Also, details of the control unit 121 will be described later.

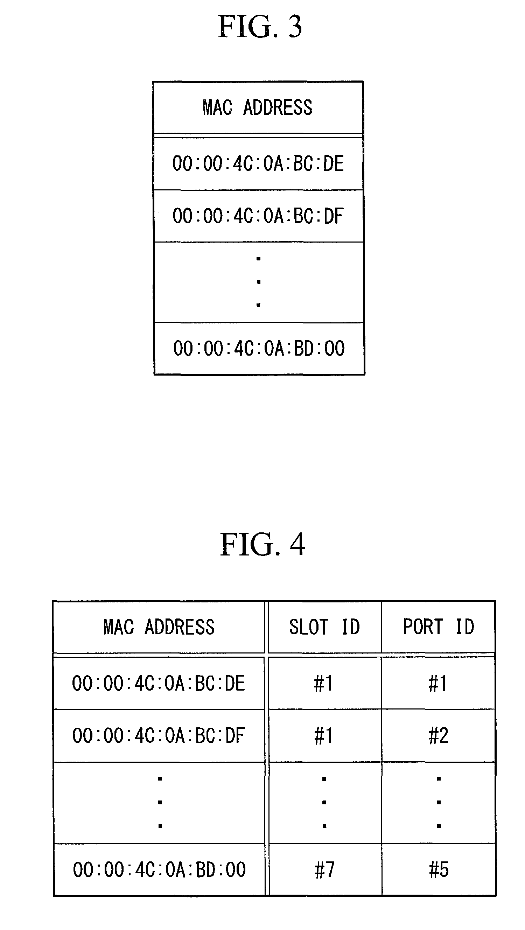

FIG. 3 is a diagram illustrating a storage content example of the memory 131. The memory 131, for example, stores a plurality of MAC addresses such as "00:00:4C:0A:BC:DE," "00:00:4C:0A:BC:DF," ..., and "00:00:4C:OA:BD:00." Also, a minimum value of the MAC address and a MAC address number may be stored as information indicating the plurality of MAC addresses. In addition, because three higher-order bytes of the MAC address indicate a manufacturer, the three higher-order bytes may be configured to avoid duplicate storing.

FIG. 4 is a diagram illustrating a storage content example of the memory 122. As illustrated in FIG. 4, the memory 122 performs a storage operation so that the MAC address "00:00:4C:0A:BC:DE," the slot ID "#1," and the port ID "#1" are associated and stored, the MAC address "00:00:4C:0A:BC:DF," the slot ID "#1," and the port ID "#2" are associated and stored, and the MAC address "00:00:4C:0A:BD:00," the slot ID "#7," and the port ID "#5" are associated and stored. That is, the association between the MAC address read from the memory 131 and each port of the interface cards 111a to 111g is stored.

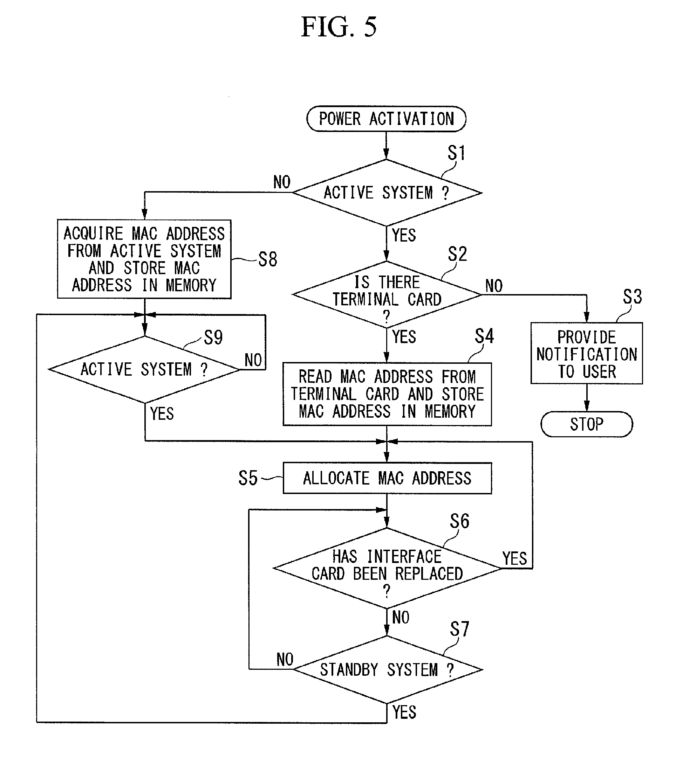

FIG. 5 is a flowchart illustrating an operation of the control unit 121. When the control unit 12 is turned on, it determines whether the control card 112 serves as the active system (S1). When it is determined that the control card 112 does not serve as the active system (serves as the standby system) (S1: No), the process transitions to step S8. After the MAC address stored by the memory 122 is acquired from the control card 112 of the active system, the process transitions to step S9. Step S9 will be described later. On the other hand, when it is determined that the control card 112 serves as the active system in step S1 (S1: Yes), the control unit 121 determines whether the terminal card 113 is inserted into the chassis 101 (S2). When the terminal card 113 is determined not to be inserted (S2: No), a manager or the like of the communication device 100 is notified that the terminal card 113 is not inserted into the chassis 101 by turning on of a light emitting diode (LED) or the like of the control card 112 including the control unit 121.

On the other hand, when it is determined that the terminal card 113 is inserted in the determination of step S2 (S2: Yes), the control unit 121 reads a MAC address stored by the memory 131 of the terminal card 113 and causes the read MAC address to be stored in the memory 122. Also, a slot ID and a port ID stored by the memory 122 are pre-stored and the MAC address is caused to be stored in this step, so that the association between the MAC address, the slot ID, and the port ID is determined.

Next, the control unit 121 reads the MAC address from the memory 122 and notifies the corresponding interface cards 111a to 111g of the read MAC address, thereby allocating the MAC address. For example, when storage content of the memory 122 as in FIG. 4 is stored, the control unit 121 notifies the interface card 111a inserted into the slot of the slot ID "#1" that the MAC address of the port ID "#1" is "00:00:4C:0A:BC:DE" and the MAC address of the port ID "#2" is "00:00:4C:0A:BC:DF."

Next, the control unit 121 determines whether any of the interface cards 111 has been replaced (S6). When it is determined that an interface card 111 has been replaced (S6: Yes), the process returns to step S5. A MAC address corresponding to a replacement interface card 111 is read from the memory 122, and the interface card 111 is notified of the read MAC address. That is, the same MAC address as the MAC address allocated to each port of the interface card 111 before the replacement is allocated to each port of the replacement interface card 111.

In addition, when it is determined that no interface card 111 has been replaced in step S6 (S6: No), the process transitions to step S7. The control unit 121 determines whether the control card 112 serves as the standby system. When it is determined that the control card 112 does not serve as the standby system (S7: No), the process returns to step S6. When it is determined that the control card 112 serves as the standby system (S7: Yes), the process transitions to step S9. In step S9, the control unit 121 determines whether the control card 112 serves as the active system. When it is determined whether the control card 112 serves as the active system (S9: Yes), the process transitions to the above-described step S5. When it is determined that the control card 112 does not serve as the active system (S9: No), step S9 is iterated until the control card 112 serves as the active system.

Also, when the control card 112 has been reset, the control unit 121 first determines whether the control card 112 serves as the active system in step S1 as in a power activation time. Accordingly, when it is determined that the control card 112 serves as the active system and when the memory 122 of the control card 112 stores the MAC address, the process transitions to step S5 without performing the process of steps S2 and S4, so that the MAC address is allocated and a subsequent operation is substantially the same as described above. Alternatively, when it is determined that the control card 112 serves as the active system in step S1 and it is further determined that "the terminal card is absent" in step S2, the process may transition to step S5 after notification to a user in step S3, and the MAC address stored in the memory 122 before a reset operation may be allocated.

As described above, storage content of the memory 122 is retained even when the control card 112 is reset. For example, the memory 122 may be a rewritable non-volatile memory such as a flash memory or a volatile memory such as a dynamic random access memory (DRAM), and may be configured to retain storage content even when the control card is reset. Thereby, because the MAC address stored by the memory 122 of the control card 112 is not changed even when a replacement, a fault, or the like of the terminal card 113 occurs, communication using the same MAC address can be performed.

In addition, when the control unit 121 determines that the control card 112 does not serve as the active system in step S1 after the control card 112 has been reset, and further the memory 122 of the control card 112 stores the MAC address, the process may be configured to transition to step S9 without performing the process of step S8.

In addition, even when power is activated, the control units 121 of the active system and the standby system may be configured to use the MAC address stored by the memory 122 without acquiring a new MAC address when the memory 122 stores the MAC address in the reset time described above.

In addition, although the interface cards 111a to 111g have been described as nodes of Ethernet (registered trademark) in this embodiment, some or all of the interface cards 111a to 111g may be cards serving as other network nodes of a wireless LAN, optical communication, and the like. In addition, although each of the interface cards 111a to 111g has been described as including five ports, the number of ports may be one or a number greater than one.

In addition, the communication device 100 may also include an interface card serving as a node of a network which does not use a MAC address.

In addition, although the control cards 112 have been described as being the two control cards 112a and 112b, the number of control cards 112 may exceed two.

In addition, although the association between the MAC address and each port has been described as being performed by causing the MAC address to be stored in the memory 122 which stores the slot ID and the port ID, other methods may be used. For example, the association may be configured to be performed based on a predetermined rule so that the MAC address is configured to be associated from a small slot ID in the port ID "#1" and then the MAC address is configured to be associated from a small slot ID in the port ID #2 or so that the MAC address is configured to be associated from a small port ID in the slot ID "#1" and then the MAC address is configured to be associated from a small slot ID in the slot ID "#2." In addition, the association may be configured to be performed based on a rule set by the manager. In these cases, when the MAC address is acquired from the active system in step S8, the control unit 121 of the standby system may acquire the MAC address with its association, and the same association as in the active system may be configured to be formed by performing the association by the same rule even in the standby system. Alternatively, the memory 131 may pre-store the association.

Because a device of a communication destination may perform authentication by the MAC address, it is difficult to continue communication if settings of another device are not changed when the MAC address is changed. However, because the communication device 100 of this embodiment uses the MAC address stored by the memory 131 of the terminal card 113 along with the control cards 112a and 112b, it is possible to continue communication in a state in which the MAC address of each port is maintained even when the control card serving as the standby system is switched to the active system when the control card of the active system is abnormal.

In addition, even when the interface card 111 is replaced at the abnormal time or the like of the interface card 111, it is possible to continue communication in a state in which the MAC address of each port is maintained even when the interface card 111 is replaced because the control unit 121 of the control card 112 serving as the active system at that time allocates the same MAC address as the MAC address allocated to each port of the interface card 111 before the replacement to each port of the interface card 111 after the replacement.

Compared to the interface card 111, the control card 112, the chassis 101, and the like, the terminal card 113 has a simple configuration and a fault probability is low. Accordingly, the terminal card 113 is configured to have the memory 131 storing the MAC address, so that a possibility of changing the MAC address according to a fault of an element other than the memory 131 can be reduced.

In addition, because the control unit 121 of the control card 112 continuously uses the MAC address stored in the memory 122 even when the terminal card 113 is replaced at the abnormal time or the like of the terminal card 113, communication can continue in a state in which the MAC address of each port is maintained.

In addition, the function of the control unit 121 in FIG. 2 may be implemented by recording a program for implementing the function of the control unit 121 on a computer-readable recording medium and causing a computer system to read and execute the program recorded on the recording medium. The "computer system" used herein may include an operating system (OS) and/or hardware such as peripheral devices.

In addition, the "computer-readable recording medium" refers to a storage apparatus including a flexible disk, a magneto-optical disc, a read only memory (ROM), a portable medium such as a compact disc-ROM (CD-ROM), and a hard disk embedded in the computer system. Further, the "computer-readable recording medium" may include a medium for temporarily and dynamically storing programs, like a communication line when a program is transmitted via a network such as the Internet or a communication line such as a telephone line, and a medium for storing programs for a predetermined time, like a volatile memory inside a computer system including a server and a client in that case. The program may be a program for implementing some of the above-described functions. Alternatively, the program may be a program capable of implementing the above-described functions in combination with a program previously stored in a computer system.

Although the embodiment of the present invention has been described above in detail with reference to the drawings, specific configurations are not limited thereto and design changes and the like can also be made without departing from the scope of the present invention.

Priority is claimed on Japanese Patent Application No. 2011-075122, filed March 30, 2011, the content of which is incorporated herein by reference.

### INDUSTRIAL APPLICABILITY

It is possible to continue communication without changing a MAC address even when a control unit configured to manage the MAC address is abnormal or the like.

### [Description of Reference Symbols]

- 100: Communication device
- 101: Chassis
- 111a: Interface card
- 111b: Interface card
- 111c: Interface card
- 111d: Interface card
- 111e: Interface card
- 111f: Interface card
- 111g: Interface card
- 112a: Control card
- 112b: Control card
- 113: Terminal card
- 121a: Control unit
- 122a: Memory
- 131: Memory

## Claims

1. A communication device comprising:
a plurality of interface units, each of which is an interface unit serving as a node connected to a network and is associated with at least one media access control (MAC) address;
a storage unit which stores information indicating a plurality of MAC addresses; and
a plurality of control units, each of which notifies one of the plurality of interface units of a MAC address indicated by information read from the storage unit.

2. The communication device according to claim 1,
wherein at least one of the plurality of control units operates as an active system control unit,
wherein the active system control unit reads the MAC address from the storage unit, stores the read MAC address in a temporary storage unit provided in the active system control unit, and uses the MAC address stored by the temporary storage unit provided in the active system control unit when the notification of the MAC address is provided, and
wherein a standby system control unit other than the active system control unit acquires the MAC address from the active system control unit, and stores the acquired MAC address in a temporary storage unit provided in the standby system control unit.

3. The communication device according to claim 1, wherein, when power of the communication device is activated, the control unit notifies each of the plurality of interface units of a MAC address read from the storage unit before a power activation time or notifies each of the plurality of interface units of a MAC address read from the storage unit before a reset time when the plurality of control units are reset.

4. The communication device according to claim 1,
wherein at least one of the plurality of control units operates as an active system control unit, and
wherein, when the interface unit has been replaced, the active system control unit notifies a replacement interface unit of the same MAC address as the MAC address that was notified to the interface unit before the replacement was performed.

5. A MAC address distribution method for use in a communication device, which includes a plurality of interface units, each of which is an interface unit serving as a node connected to a network and is associated with at least one MAC address, a storage unit which stores information indicating a plurality of MAC addresses, and a plurality of control units, each of which notifies one of the plurality of interface units of a MAC address, the MAC address distribution method comprising:
a first process of notifying, by one of the control units, each of the plurality of interface units of a MAC address indicated by the information read from the storage unit.

6. The MAC address distribution method according to claim 5,
wherein at least one of the plurality of control units operates as an active system control unit, and
wherein the MAC address distribution method comprises:
a second process of reading, by the active system control unit, the MAC address from the storage unit when the notification of the MAC address is provided in the first process and storing the read MAC address in a temporary storage unit provided in the active system control unit, and
a third process of acquiring, by a standby system control unit other than the active system control unit, the MAC address from the active system control unit, and storing the acquired MAC address in a temporary storage unit provided in the standby system control unit.

7. The MAC address distribution method according to claim 5, wherein the first process is a process of notifying, by the plurality of control units, each of the plurality of interface units of a MAC address indicated by information read from the storage unit before a power activation time or before a reset time when power of the communication device is activated or when the plurality of control units are reset.

8. The MAC address distribution method according to claim 5,
wherein at least one of the plurality of control units operates as an active system control unit, and
wherein the MAC address distribution method comprises:
a fourth process of notifying, by the active system control unit, a replacement interface unit of the same MAC address as the MAC address that was notified to the interface unit before the replacement was performed when the interface unit has been replaced.

9. A program for causing a computer of each of a plurality of control units in a communication device, which includes a plurality of interface units, each of which is an interface unit serving as a node connected to a network and is associated with at least one MAC address, a storage unit which stores information indicating a plurality of MAC addresses, and the control units, each of which notifies one of the plurality of interface units of a MAC address, to execute a first process of notifying each of the plurality of interface units of a MAC address indicated by the information read from the storage unit when the control unit serves as an active system.

10. A control device connected to a plurality of communication devices each including a plurality of interface units, each of which is an interface unit serving as a node connected to a network and is associated with at least one MAC address, and a storage unit which stores information indicating a plurality of MAC addresses,
wherein each of the plurality of interface units is notified of a MAC address indicated by information read from the storage unit.
